# EUROPEAN PATENT SPECIFICATION

(11) **EP 1 493 009 B1**
(45) Date of publication and mention of the grant of the patent: **14.11.2007**
(21) Application number: 03716073.6
(22) Date of filing: 21.02.2003
(51) Int. Cl.: G01M 11/02

(54) **DUAL INSPECTION OF OPHTHALMIC LENSES**
DOPPEL-INSPEKTION VON OPHTHALMISCHEN LINSEN
DOUBLE INSPECTION DE LENTILLES OPHTALMOLOGIQUES

(30) Priority: 21.02.2002 US 359075 P
(43) Date of publication of application: 05.01.2005
(73) Proprietor: Johnson & Johnson Vision Care, Inc., Jacksonville, FL 32256 (US)
(72) Inventor: CHRUSCH, Peter P., Jacksonville, FL 32256 (US); DISPENZA, Anthony J., Jacksonville, FL 32256 (US); DOLAN, Mary L., Jacksonville, FL 32250 (US); ABRAMS, Richard Wayne, Jacksonville, Florida 32256 (US); WIDMAN, Michael Francis, Jacksonville, Florida 32223 (US); DOLAN, David, Jacksonville Beach, Florida 32250 (US)
(74) Representative: Tunstall, Christopher Stephen
(86) International application number: PCT/US2003/004886
(87) International publication number: WO 2003/073060

(56) References cited:
- EP-A- 0 660 098
- EP-A- 1 248 092
- WO-A-00/26647
- US-A- 5 861 910
- US-A- 5 917 588
- US-A- 6 153 873
- US-B1- 6 201 600

## Description

### FIELD OF THE INVENTION

The instant invention relates to the inspection of optical media, such as ophthalmic lenses. More especially, it is directed to a method and system for inspecting ophthalmic lenses using at least two different machine vision techniques, each at different locations in the manufacturing process. The implementation of multiple inspections based on different techniques each at distinct positions on-line in the manufacturing process results in a dramatic improvement in overall yield, and a significant decrease in false accepts and false rejects of the ophthalmic lenses produced therein.

Various techniques for inspecting ophthalmic lenses exist. Initial endeavors relied upon human inspectors to visually examine the lens for defects, typically by placing it under magnification or projecting it onto a screen whereupon the inspector would manually search for irregularities. The labor intensive and subjective nature of human operator inspections prompted interest in automating the inspection process. Numerous methods have been investigated in this regard, foremost of which are those whereby an image of the ophthalmic lens is acquired, the image then being electronically evaluated for defects. Commonly, these methods take advantage of the fact that light, under certain circumstances when encountering a lens irregularity, scatters in a manner that can be qualitatively assessed. These methods generally operate by manipulating a light beam before and/or after it passes through an ophthalmic lens in order to extract optical information that is subsequently analyzed to assess for flaws.

Prior art techniques of this kind include, but are not limited to, those that image the ophthalmic lens under either dark field (DF) or bright field (BF) illumination conditions. In one practice of dark field, the manipulation of the light beam entails partially blocking the light source so that only light rays whose path through the ophthalmic lens have been disrupted by e.g. a lens flaw or irregularity, will be imaged. In a dark field system, anything that causes a change in the path of light rays traversing the lens will be greatly enhanced and will appear in the image as a bright spot on a dark background or field. An example of a dark field illumination inspection technique in this regard is reported in Canadian Patent Application 2057832. Other configurations to achieve dark field illumination exist and include e.g. circumstances where the light rays are not partially blocked at the source, but are instead selectively blocked after they pass through the ophthalmic lens, e.g. by locating a stop between the ophthalmic lens and the imaging camera as described in U.S. Pat. No. 5,528,357. In bright field illumination, the light source is usually not blocked, the ophthalmic lens thus being fully illuminated by same. The manipulation of the light beam in a bright field system causes lens irregularities to appear as dark spots against a bright background or field. An example of a bright field inspection system is described in U.S. Pat. No. 5,500,732.

While the aforementioned techniques are used for a common purpose, i.e. the inspection of ophthalmic lenses, differences nonetheless inhere. For example, dark field imaging is considered by some to be better at detecting surface details, whereas bright field imaging is thought to have an advantage in edge detection. The choice of which technique to use is often governed by specific requirements for the imaging application, as well as mechanical constraints in the working environment.

Conventionally, ophthalmic lens manufacturing lines employ one or another of these known techniques for purposes of inspection. The usual practice in this regard is to locate one automated inspection station, utilizing a single imaging technique, e.g. dark field or bright field, within a given manufacturing line to inspect all of the ophthalmic lenses produced therein. Other scenarios have been proposed whereby a plurality of automated inspection stations, all utilizing the same imaging technique, are employed in a given manufacturing line; for example, Canadian Patent Application 2057832 aforesaid hypothesizes on the deployment of its dark field inspection system at various points along the production process described therein.

Although prior art inspection practices as presently employed have for the most part proven satisfactory for practical industrial purposes, there have been instances where some ophthalmic lenses have either passed inspection when in fact they were fatally flawed (False Accepts), or have been rejected after inspection when in fact they were quite acceptable (False Rejects). While production can be adjusted to account for and off set this problem, overall yield and quality assurance are nonetheless adversely affected. Moreover, flaws that are identified through the inspection process often point to what it is that has gone awry in the manufacturing process and/or the equipment to cause the flaws to begin with. The inspection process thus serves as a troubleshooting adjunct for the manufacturing line. False inspection results frustrate this and cause the inefficient use of resources in this regard.

Accordingly, there exists a need to improve the inspection scenario in order to reduce the number of False Rejects and False Accepts, with related increase in overall yield, and more effectual troubleshooting. This need is fulfilled by the following invention.

### DETAILED DESCRIPTION OF THE INVENTION

This invention includes a method for inspecting an ophthalmic lens comprising
(a) inspecting the lens at one location in the ophthalmic lens manufacturing process using a first machine vision inspection technique, and
(b) inspecting the lens at another location in the ophthalmic lens manufacturing process using a second machine vision inspection technique.

As used herein, the term "ophthalmic lens" includes but is not limited to hard contact lenses, soft contact lenses, rigid gas permeable contact lenses, intra-ocular lenses and lenses for eyeglasses. The ophthalmic lenses inspected in this invention may or may not contain vision correction. The preferred lenses are soft contact lenses with or without vision correction. Soft lenses may be made of conventional hydrogels and are generally prepared from monomers including but not limited to hydroxyethyl methacrylate (HEMA), vinyl pyrrolidone, glycerol methacrylate, methacrylic acid and acid esters; or silicone hydrogels. While not constraining the present invention, soft contact lenses in this regard are typically prepared by free radical polymerization of a monomer in a plastic mold having male and female halves of predetermined shape and characteristic. The monomer mix may contain additives known in the art, e.g. crosslinking and strengthening agents. Polymerization is conventionally initiated by thermal means or is photoinitiated by either ultraviolet (UV) or visible light. For the latter circumstance, the plastic molds in which polymerization occurs are effectively transparent to the photoinitiating light. Plastics serviceable as materials of construction for the molds in this regard include without limitation: polyolefins, such as low-density polyethylene, medium-density polyethylene, high-density polyethylene, polypropylene, and copolymers of polypropylene and polyethylenes aforesaid: polystyrene; poly-4-methylpentene; polyacetal resins; polyacrylether; polyarylether; sulfones; Nylon 6; Nylon 66; Nylon 11; thermoplastic polyester; and various fluorinated materials such as the fluorinated ethylene propylene copolymers and ethylene fluoroethylene copolymers. Examples of soft contact lenses include but are not limited to etafilcon A, genfilcon A, lenefilcon A, polymacon, acquafilcon A, balafilcon A, lotrafilcon A and silicone hydrogels as prepared in U.S. Pat. No. 5,998,498, US Pat. App. No. 09/532,943, a continuation-in-part of US Pat App. No. 09/532,943, filed on August 30, 2000, U.S. Pat. Ser. No. 09/957, 299 filed on September 20, 2001, U.S. Patent No. 6,087,415, U.S. Pat. No. 5,760,100, U.S. Pat. No.5,776, 999, U.S. Pat. No. 5,789,461, U.S. Pat. No. 5,849,811, U.S. Pat. No. 5,965,631, U.S. Pat. App. No. 60/318,536, entitled Biomedical Devices Containing Internal wetting Agents," filed on September 10, 2001 and its non-provisional counterpart of the same title, filed on September 6, 2002.

Numerous processes are known for making ophthalmic lenses, including various processes to make soft hydrogel contact lenses. While the present invention is applicable across the board to all ophthalmic lens processes, a preferred practice, along with its correlative manufacturing line stations, will now be described in the context of a soft hydrogel contact lens, it being understood that the present invention is not limited thereby.

In a preferred aspect, the soft contact lens manufacturing process melts and injection molds thermoplastic resin particles such as for example, polystyrene, into shapes corresponding to the male and female mold halves aforesaid. These mold halves are conventionally denominated as the Front Curve (female) and Back Curve, or Base Curve, (male) mold pieces. Pallets having e.g. wells therein in which are seated the Front Curve mold halves, or other types of lens carriers, are typically employed in order to permit processing of a multiplicity of lenses at a given time so to increase throughput. These pallets or carriers are conveyed through the manufacturing line by way of conveyor or other suitable transport means and mechanisms known in the art.

Once the mold piece has been formed, monomer, which can include other materials employed to make the hydrogel lenses, is deposited into the Front Curve. Without limitation, other materials in this regard preferably include one or more ultraviolet (UV) absorption additives. These can be included in the monomer mix thereby rendering the resultant ophthalmic lens substantially opaque to light of wavelengths up to about 400 nm; more typically about 200nm to about 400nm; even more typically about 280 nm to about 360 nm; and finally about 320 nm to about 355 nm. By way of example only, UV absorbers of this kind include NORBLOCK (commercially available from JANSSEN). While the amount of such absorbers can vary, depending also on the type of final absorption behavior sought, it is typical that such absorbers are present in an amount of approximately 1 part absorber per hundred parts monomer, e.g. HEMA. Other absorptive materials include tints, the color of which can be correlated by those in the art to obtain absorption of other particular wavelengths, e.g. yellow light would be absorbed by a lens having a blue tint.

After monomer deposition, the Back Curve is mated with the Front Curve. Curing of the monomer, typically by actinic radiation although other methods known in the art can be used, then commences. Once cured, the mold halves must be separated in order to eventually retrieve the contact lens. To do so, it is common to preheat the mold at various times and temperatures known in the art using for example, infrared radiation. Preheating facilitates the demold step, i.e. the step wherein the Back Curve is separated from the Front Curve. The cured hydrogel lens typically remains intact in the Front Curve mold half for purposes of expedience in later transport and handling. At this point in the manufacturing line, the actual lens making process is complete. The demold step can include the use of robotic pry fingers that are inserted between the mold halves to disengage one from the other. Following demold, the lens, while still in the Front Curve, is subject to a hydration step wherein the lens is contacted with water, or another solvent to flush same of uncured monomer, particulate and the like, and to disengage the lens from the Front Curve whereafter it is extracted from the mold and transferred to its final shipping package and typically filled with de-ionized water, for inspection, then subsequently filled with packing solution and sealed for shipment. For purposes of this description, the manufacturing steps up to and including hydration are denominated as being "upstream" in the process; manufacturing steps after hydration and transference of the lens to its final package are denominated as being "downstream" in the process.

As used herein "machine vision inspection techniques" include without limitation, procedures and processes known to detect aberrations in smooth surfaces using light. Such techniques include, among others, those that employ or are otherwise characterized or denominated as dark field illumination, bright field illumination, absorptive inspection, structure light, fluorescence, spectral masking. Without constraining the present invention to any particular inspection techniques examples of these inspection techniques may be found in the following publications. An example of a dark field illumination inspection technique is described in U.S. Pat. No. 5.528.357. An example of a bright field illumination inspection technique is described in U.S. Pat. No. 5,500,732. An example of an absorptive technique is described in U.S. Pat. App. Ser. No. 09/751,875, filed December 29, 2000, entitled "Inspection of Ophthalmic Lenses Using Absorption,". An example of structure light inspection is described in U.S. Pat. No. 5,574,554. An example of fluorescence inspection is described in U.S. Pat. No. 5,633,504.

In the practice of the invention, at least two different inspection techniques are employed, each one being at a different location in the manufacturing process line. Hence, two, three, four or more different inspection techniques can be implemented in accordance with the invention. Preferably, two different techniques are used. More preferably, a bright field illumination technique and an absorptive technique are used. Each inspection station (technique) is positioned at a different point in the manufacturing process line. Preferably the inspection techniques are positioned as an integral and contiguous part of the manufacturing platform, hereinafter known as "on-line." Off-line inspections (inspections separate from the manufacturing platform)however are also within the scope of the invention. Preferably, at least one inspection station is positioned upstream in the process, and at least one of the other inspection stations is positioned in the downstream portion of the processing line.

In one embodiment, an absorptive technique is employed in the upstream portion of the processing line. In another embodiment, a bright field illumination technique is employed in a downstream portion of the processing line. In a first preferred practice, an absorptive technique, as for example described in U.S. Pat. App. No. 09/751875, is employed upstream between the demold step and the hydration step; more preferably immediately after the demold step. The absorptive technique in this regard can be operated using light at any suitable wavelength, as for example described in U.S. Pat. App. No. 09/751875, including ultraviolet (UV), visible and infrared (IR). Preferably, however, the absorptive technique is operated at ultraviolet (UV) wavelengths, e.g. up to about 400nm; more preferably at select UV wavelengths, e.g. from about 200nm to about 400nm; even more preferably from about 280nm to about 360nm; still more preferably from about 320nm to about 355nm. In a particularly preferred practice, the absorptive technique employs a narrowband filter centered at 340nm, with a 10 nm bandwidth. The filter is preferably installed in a camera lens having a design that approximates the curvature of the ophthalmic lens under inspection. In practice, absorptive technique of the sort described herein cause anomalies (e.g. cosmetic flaws) in the lens to appear as bright spots within the dark image. Various algorithms are utilized to assess the severity of the flaw against defined quality control standards. In a preferred embodiment, the algorithm used in the absorptive technique assesses the center of the lens, (the entire lens except the edge) for flaws; In another preferred embodiment, the algorithm used in the bright field illumination technique assesses only the lens edge for flaws. These algorithms are those that are conventionally known or as can be adapted by the artisan for the purposes aforesaid. For example and without limitation, a serviceable algorithm that can be adapted to the bright field illumination technique and edge detection is described in US Pat. No. 5,717,781.

Without constraining the invention in any way, the preferred practice of providing an inspection step in the upstream section of the process as contemplated by the invention is especially advantageous inasmuch as 1) the lens under inspection is, by virtue of being immobilized in the Front Curve, precisely located and oriented; this results in greater efficiencies in the inspection step; 2) upstream inspection as preferably contemplated provides immediate feedback for process control; that is, the upstream portion of the process is that portion of the process wherein the lens per se is formed prior to hydration. Hence, if defects are found by upstream inspection, they can be traced back to the related (upstream) process step much more effectively than if they were detected later on. Moreover, utilizing an absorptive inspection technique, as preferred and as e.g. heretofore described and incorporated through USSN 09/751,875, in the upstream portion of the manufacturing process has the still added benefit of being able to discriminate between cosmetic flaws that are important to lens quality from (non-defect) artifacts in the lens that are less, or not, important to same. Cosmetic flaws important to lens quality include without limitation holes, tears, chips and voids; artifacts that are less or not important to lens quality include without limitation pulls, scuffs and water marks. By being able to discriminate in this regard, e.g. using the subject absorptive technique, a more exacting inspection can occur, the result being tighter quality control with fewer false rejections. Lastly, conducting an inspection immediately after demold using an absorptive technique as preferred has the advantage of detecting only anomalies in the lens; that is, non-defect artifacts that may appear in the image due, e.g. to carrier quality issues such as scratches on the package, or foreign matter in the solution, do not adversely affect the inspection protocol. Lenses that do not pass inspection at this juncture are rejected prior to entering the hydration stage.

Further in regard to this preferred practice, a bright field illumination technique, as for example described in U.S. Pat. No. 5,500,732 is employed downstream, after the hydration step. More preferably, a bright field illumination technique is employed at a location where handling of the lens is complete, e.g. when the ophthalmic lens is in its final package filled, with de-ionized water. The bright field technique employs visible light having a wavelength of from about 400 nm to about 700 nm, more preferably about 560 nm to about 640 nm. In a preferred practice of the bright field technique, various defect detection algorithms operate on the lens edge only, although other center algorithms may be used to analyze other aspects of the image. Without limitation, the final package, often referred to in the art as primary packaging, includes by way of preference, the base of the blister packs into which the lenses are placed, which bases are ultimately covered typically with a heat sealed foil laminate, to form the blister pack. Such bases are conventionally formed of plastic molded pieces of unitary construction, typically translucent, such as described in U.S. Pat. No. 5,467,868.

The advantage of inspection at this point in the process, where the lens is in its final package, is that no additional lens handling occurs thereafter, and any lens damage that is detected by the inspection can be attributed directly to the lens handling mechanism after the hydration step. Also, any defects that may have been missed in the machine vision inspection system used in the upstream inspection can be detected here at the downstream inspection point.

Further the invention includes a device for inspecting an ophthalmic lens comprising
(a) a first machine vision inspection technique at one location in the ophthalmic lens manufacturing process and
(b) a second machine vision inspection technique at another location in the ophthalmic lens manufacturing process. The terms machine vision inspection technique, ophthalmic lens and on-line all have their aforementioned meanings and preferred ranges. The following example is offered to illustrate the invention only; and not intended to limit its scope.

### EXAMPLE

In a manufacturing line used to fabricate a soft hydrogel contact lens a multiplicity of such lenses were fabricated: HEMA was used as the monomer, the HEMA having admixed therein a NORBLOCK UV absorber at about 1 part NORBLOCK per 100 parts HEMA. The admixture was deposited in a Front Curve mold. The Back Curve mold was mated thereto and the admixture was cured by actinic radiation. In a demolding step, the Back Curve was disengaged from the Front Curve, the (cured) soft contact lens remaining in the Front Curve. The lens was thereafter hydrated and removed from the Front Curve and placed in its final package which consisted of a plastic mold piece of unitary construction, which final package was filled with de-ionized water.

In accordance with a preferred practice of the invention, inspection was carried out immediately after demold using the UV absorption technique described in USSN 09/751,875. The inspection system irradiated the lens, while in the Front Curve, with light at a wavelength centered at 340 nm, with a 10nm bandwidth. A second inspection took place after the lens was placed in its final package. The second inspection utilized the bright filed inspection technique described in US Pat. No. 5,500,732. Visible light is employed having a wavelength of 560 nm to 640 nm. The algorithms used in the UV absorption technique operated on the entire lens, except the edge. The algorithms used in the bright field technique operated only on the edge of the lens under inspection. Thus the entire lens was inspected for flaws by implementing multiple inspections based on different imaging techniques, each at distinct locations in the manufacturing process, and as exemplified, implementing different inspection algorithms based on physical location within the lens itself.

The result of using at least two different inspection techniques at different points in the manufacturing line, as representative of the practice of the present invention, resulted in an increase in overall yield of about 20% over the use of either of the inspection systems singly. Moreover a significant reduction in False Rejects and False Accepts was observed in the practice of the invention, as embodied in the present example, over the use of either of the inspection systems singly.

## Claims

1. A method for inspecting an ophthalmic lens comprising:
(a) inspecting the lens at one location in an on-line ophthalmic lens manufacturing process line using a first machine vision inspection technique, and
(b) inspecting the lens at another location in the on-line ophthalmic lens manufacturing process line using a second machine vision inspection technique, wherein the on-line manufacturing process has an upstream portion including a demold step and a hydration step, and a downstream portion including a step of placing said ophthalmic lens into a final package, wherein said first machine vision inspection technique is located in said upstream portion and said second machine vision inspection technique is located in said downstream portion.

2. The method of Claim 1 wherein said first machine vision inspection technique is selected from a dark field illumination inspection technique, a bright field illumination inspection technique and an absorptive inspection technique.

3. The method of Claim 1 wherein said first machine vision inspection technique is located between said demold step and said hydration step.

4. The method of Claim 1 wherein said first machine vision inspection technique is an absorptive inspection technique.

5. The method of Claim 4 wherein said absorptive inspection technique employs light at a wavelength of up to about 400nm.

6. The method of Claim 4 wherein said absorptive inspection technique employs light at a wavelength of about 340 nm.

7. The method of Claim 1 wherein said second machine vision inspection technique is located before said step of placing said soft hydrogel contact lens into said final package

8. The method of Claim 7 wherein said second machine vision inspection technique is a bright field illumination inspection technique.

9. The method of Claim 8 wherein said bright field inspection technique employs light at a wavelength of about 560 nm to about 640 nm.

10. The method of Claim 1 wherein said first machine vision inspection technique is located on-line in the upstream portion of the on-line manufacturing process line and is an absorptive inspection technique, and wherein said second machine vision inspection technique is located on-line in the down stream portion of the on-line manufacturing process line and is a bright field inspection technique.

11. The method of Claim 10 wherein said absorptive inspection technique employs light at a wavelength of about 0 nm to about 360 nm and bright field inspection technique employs light at a wavelength of about 560 nm to about 640 nm.

12. The method of Claim 11 wherein said absorptive inspection technique employs light at a wavelength of about 340 nm and bright field inspection technique employs light at a wavelength of about 560 nm to about 640 nm.

13. A device for inspecting an ophthalmic lens comprising:
(a) a first machine vision inspection technique at one location in the on-line ophthalmic lens manufacturing process line and
(b) a second machine vision inspection technique at another location in the on-line ophthalmic lens manufacturing process line, wherein said ophthalmic lens manufacturing process line has an upstream portion including a demold step and a hydration step, and a downstream portion including a step of placing said soft hydrogel contact lens into a final package, wherein said first machine vision inspection technique is located in said upstream portion and said second machine vision inspection technique is located in said downstream portion.

14. The device of Claim 13 wherein said first machine vision inspection technique is selected from a dark field illumination inspection technique, a bright field illumination inspection technique and an absorptive inspection technique.

15. The device of Claim 14 wherein said first machine vision inspection technique is located between said demold step and said hydration step.

16. The device of Claim 13 wherein said first machine vision inspection technique is an absorptive inspection technique.

17. The device of Claim 16 wherein said absorptive inspection technique employs light at a wavelength of up to about 400nm.

18. The device of Claim 16 wherein said absorptive inspection technique employs light at a wavelength of about 340 nm.

19. The device of Claim 14 wherein said second machine vision inspection technique is located before said step of placing said soft hydrogel contact lens into said final package.

20. The device of Claim 19 wherein said second machine vision inspection technique is a bright field illumination inspection technique.

21. The device of Claim 20 wherein said bright field inspection technique employs light at a wavelength of about 560 nm to about 640 nm.

22. The device of Claim 13 wherein said first machine vision inspection technique is located on-line in the upstream portion of the manufacturing process line and is an absorptive inspection technique, and wherein said second machine vision inspection technique is located on-line in the down stream portion of the manufacturing process line and is a bright field inspection technique.

23. The device of Claim 22 wherein said absorptive inspection technique employs light at a wavelength of about 0nm to about 360nm and bright field inspection technique employs light at a wavelength of about 560 nm to about 640 nm.

24. The device of Claim 23 wherein said absorptive inspection technique employs light at a wavelength of about 340 nm and bright field inspection technique employs light at a wavelength of about 560 nm to about 640 nm.

## Patentansprüche

1. Verfahren zum Prüfen einer ophthalmischen Linse, das aufweist:
(a) Prüfen der Linse an einem Ort in einer unterbrechungsfreien Prozeßstraße für das Herstellen ophthalmischer Linsen, wobei eine erste Maschinensichtprüftechnik verwendet wird, und
(b) Prüfen der Linse an einem anderen Ort in der unterbrechungsfreien Prozeßstraße zum Herstellen ophthalmischer Linsen, wobei eine zweite Maschinensichtprüftechnik verwendet wird, wobei der unterbrechungsfreie Herstellungsprozeß einen stromaufwärtigen Teil, der einen Entformungsschritt und einen Hydrierschritt umfaßt, und einen stromabwärtigen Teil, der einen Schritt des Bringens der ophthalmischen Linse in eine endgültige Verpackung umfaßt, hat, wobei die erste Maschinensichtprüftechnik sich in dem stromaufwärtigen Teil und die zweite Maschinensichtprüftechnik sich in dem stromabwärtigen Teil befindet.

2. Verfahren nach Anspruch 1, bei dem die erste Maschinensichtprüftechnik aus einer Prüftechnik mit Dunkelfeldbeleuchtung, einer Prüftechnik mit Hellfeldbeleuchtung und einer auf Absorption basierenden Prüftechnik ausgewählt wird.

3. Verfahren nach Anspruch 1, bei dem sich die erste Maschinensichtprüftechnik zwischen dem Entformungsschritt und dem Hydrierschritt befindet.

4. Verfahren nach Anspruch 1, bei dem die erste Maschinensichtprüftechnik eine auf Absorption basierende Prüftechnik ist.

5. Verfahren nach Anspruch 4, bei dem die auf Absorption basierende Prüftechnik Licht mit einer Wellenlänge von bis zu ungefähr 400 nm verwendet.

6. Verfahren nach Anspruch 4, bei dem die auf Absorption basierende Prüftechnik Licht mit einer Wellenlänge von ungefähr 340 nm verwendet.

7. Verfahren nach Anspruch 1, bei dem die zweite Maschinensichtprüftechnik sich vor dem Schritt des Bringens der weichen Hydrogel-Kontaktlinse in die endgültige Verpackung befindet.

8. Verfahren nach Anspruch 7, bei dem die zweite Maschinensichtprüftechnik eine Prüftechnik mit Hellfeldbeleuchtung ist.

9. Verfahren nach Anspruch 8, bei dem die Prüftechnik mit Hellfeld Licht bei einer Wellenlänge von ungefähr 560 nm bis ungefähr 640 nm benutzt.

10. Verfahren nach Anspruch 1, bei dem die erste Maschinensichtprüftechnik sich unterbrechungsfrei in dem stromaufwärtigen Teil der unterbrechungsfreien Herstellungsprozeßstraße befindet und eine auf Absorption basierende Prüftechnik ist und bei dem die zweite Maschinensichtprüftechnik sich unterbrechungsfrei in dem stromabwärtigen Teil der unterbrechungsfreien Herstellungsprozeßstraße befindet und eine Prüftechnik mit Hellfeld ist.

11. Verfahren nach Anspruch 10, bei dem die auf Absorption basierende Prüftechnik Licht bei einer Wellenlänge von ungefähr 0 nm bis ungefähr 360 nm benutzt und die Prüftechnik mit Hellfeld Licht bei einer Wellenlänge von ungefähr 560 nm bis ungefähr 640 nm benutzt.

12. Verfahren nach Anspruch 11, bei dem die auf Absorption basierende Prüftechnik Licht mit einer Wellenlänge von ungefähr 340 nm benutzt und die auf Hellfeld basierende Prüftechnik Licht mit einer Wellenlänge von ungefähr 560 nm bis ungefähr 640 nm benutzt.

13. Vorrichtung zum Prüfen einer ophthalmischen Linse, die aufweist:
(a) eine erste Maschinensichtprüftechnik an einem Ort in der unterbrechungsfreien Prozeßstraße zum Herstellen ophthalmischer Linsen und
(b) eine zweite Maschinensichtprüftechnik an einem anderen Ort in der unterbrechungsfreien Prozeßstraße zum Herstellen ophthalmischer Linsen, wobei die Prozeßstraße zum Herstellen ophthalmischer Linsen einen stromaufwärtigen Teil, der einen Entformungsschritt und einen Hydrierschritt umfaßt, und einen stromabwärtige Teil, der einen Schritt des Bringens der weichen Hydrogel-Kontaktlinse in eine endgültige Verpackung umfaßt, hat, wobei die erste Maschinensichtprüftechnik sich in dem stromaufwärtigen Teil befindet und die zweite Maschinensichtprüftechnik sich in dem stromabwärtigen Teil befindet.

14. Vorrichtung nach Anspruch 13, bei der die erste Maschinensichtprüftechnik aus einer Prüftechnik mit Dunkelfeldbeleuchtung, einer Prüftechnik mit Hellfeldbeleuchtung und einer auf Absorption basierenden Prüftechnik ausgewählt ist.

15. Vorrichtung nach Anspruch 14, bei der die erste Maschinensichtprüftechnik sich zwischen dem Entformungsschritt und dem Hydrierschritt befindet.

16. Vorrichtung nach Anspruch 13, bei der die erste Maschinensichtprüftechnik eine auf Absorption basierende Prüftechnik ist.

17. Vorrichtung nach Anspruch 16, bei der die auf Absorption beruhende Prüftechnik Licht mit einer Wellenlänge von bis zu ungefähr 400 nm verwendet.

18. Vorrichtung nach Anspruch 16, bei der die auf Absorption beruhende Prüftechnik Licht mit einer Wellenlänge von ungefähr 340 nm verwendet.

19. Vorrichtung nach Anspruch 14, bei der die zweite Maschinensichtprüftechnik sich vor dem Schritt des Bringens der weichen Hydrogel-Kontaktlinse in die endgültige Verpackung befindet.

20. Vorrichtung nach Anspruch 19, bei der die zweite Maschinensichtprüftechnik eine Prüftechnik mit Hellfeldbeleuchtung ist.

21. Vorrichtung nach Anspruch 20, bei der die Prüftechnik mit Hellfeldbeleuchtung Licht mit einer Wellenlänge von ungefähr 560 nm bis ungefähr 640 nm benutzt.

22. Vorrichtung nach Anspruch 13, bei der die erste Maschinensichtprüftechnik sich unterbrechungsfrei in dem stromaufwärtigen Teil der Herstellungsprozeßstraße befindet und eine auf Absorption beruhende Prüftechnik ist und bei der sich die zweite Maschinensichtprüftechnik unterbrechungsfrei in dem stromabwärtigen Teil der Herstellungsprozeßleitung befindet und eine Prüftechnik mit Hellfeld ist.

23. Vorrichtung nach Anspruch 22, bei der die auf Absorption basierende Prüftechnik Licht mit einer Wellenlänge von ungefähr 0 nm bis ungefähr 360 nm verwendet und die -Prüftechnik mit Hellfeld Licht mit einer Wellenlänge von ungefähr 560 nm bis ungefähr 640 nm verwendet.

24. Vorrichtung nach Anspruch 23, bei der die auf Absorption basierende Prüftechnik Licht mit einer Wellenlänge von ungefähr 340 nm verwendet und die Prüftechnik mit Hellfeld Licht mit einer Wellenlänge von ungefähr 560 nm bis ungefähr 640 nm verwendet.

## Revendications

1. Méthode d'inspection d'une lentille ophtalmologique comprenant :
(a) l'inspection de la lentille au niveau d'un endroit dans une chaîne de production de lentille ophtalmologique en ligne utilisant une première technique d'inspection de vision industrielle, et
(b) l'inspection de la lentille au niveau d'un autre endroit dans la chaîne de production de lentille ophtalmologique en ligne utilisant une seconde technique d'inspection de vision industrielle, dans laquelle la chaîne de production en ligne a une partie amont comprenant une étape de démoulage et une étape d'hydratation, et une partie aval comprenant une étape de placement de ladite lentille ophtalmologique dans un emballage final, dans laquelle ladite première technique d'inspection de vision industrielle est située dans ladite partie amont et ladite seconde technique d'inspection de vision industrielle est située dans ladite partie aval.

2. Méthode selon la revendication 1 dans laquelle ladite première technique d'inspection de vision industrielle est choisie parmi une technique d'inspection d'éclairage en champ sombre, une technique d'inspection d'éclairage en fond clair et une technique d'inspection absorbante.

3. Méthode selon la revendication 1 dans laquelle ladite première technique d'inspection de vision industrielle est située entre ladite étape de démoulage et ladite étape d'hydratation.

4. Méthode selon la revendication 1 dans laquelle ladite première technique d'inspection de vision industrielle est une technique d'inspection absorbante.

5. Méthode selon la revendication 4 dans laquelle ladite technique d'inspection absorbante utilise la lumière à une longueur d'onde pouvant aller jusqu'à environ 400 nm.

6. Méthode selon la revendication 4 dans laquelle ladite technique d'inspection absorbante utilise la lumière à une longueur d'onde d'environ 340 nm.

7. Méthode selon la revendication 1 dans laquelle ladite seconde technique d'inspection de vision industrielle est située avant ladite étape de placement de ladite lentille de contact de type hydrogel dans ledit emballage final.

8. Méthode selon la revendication 7 dans laquelle ladite seconde technique d'inspection de vision industrielle est une technique d'inspection d'éclairage en fond clair.

9. Méthode selon la revendication 8 dans laquelle ladite technique d'inspection d'éclairage en fond clair utilise la lumière à une longueur d'onde allant d'environ 560 nm à environ 640 nm.

10. Méthode selon la revendication 1 dans laquelle ladite première technique d'inspection de vision industrielle est située dans la partie amont de la chaîne de production et est une technique d'inspection absorbante, et dans laquelle ladite seconde technique d'inspection de vision industrielle est située dans la partie aval de la chaîne de production et est une technique d'inspection d'éclairage en fond clair.

11. Méthode selon la revendication 10 dans laquelle ladite technique d'inspection absorbante utilise la lumière à une longueur d'onde allant d'environ 0 nm à environ 360 nm et la technique d'inspection d'éclairage en fond clair utilise la lumière à une longueur d'onde allant d'environ 560 nm à environ 640 nm.

12. Méthode selon la revendication 11 dans laquelle ladite technique d'inspection absorbante utilise la lumière à une longueur d'onde d'environ 340 nm et la technique d'inspection d'éclairage en fond clair utilise la lumière à une longueur d'onde allant d'environ 560 nm à environ 640 nm.

13. Dispositif d'inspection d'une lentille ophtalmologique comprenant :
(a) une première technique d'inspection de vision industrielle au niveau d'un endroit dans la chaîne de production de la lentille ophtalmologique et
(b) une seconde technique d'inspection de vision industrielle au niveau d'un autre endroit dans la chaîne de production de la lentille ophtalmologique en ligne,
dans lequel ladite chaîne de production de la lentille ophtalmologique a une partie amont comprenant une étape de démoulage et une étape d'hydratation, et une partie aval comprenant une étape de placement de ladite lentille de contact de type hydrogel dans un emballage final, dans lequel ladite première technique d'inspection de vision industrielle est située dans ladite partie amont et ladite seconde technique d'inspection de vision industrielle est située dans ladite partie aval.

14. Dispositif selon la revendication 13 dans lequel les premières techniques d'inspection de vision industrielles sont choisies parmi une technique d'inspection d'éclairage en champ sombre, une technique d'inspection d'éclairage en fond clair et une technique d'inspection absorbante.

15. Dispositif selon la revendication 14 dans lequel ladite première technique d'inspection de vision industrielle est située entre ladite étape de démoulage et ladite étape d'hydratation.

16. Dispositif selon la revendication 13 dans lequel ladite première technique d'inspection de vision industrielle est une technique d'inspection absorbante.

17. Dispositif selon la revendication 16 dans lequel ladite technique d'inspection absorbante utilise la lumière à une longueur d'onde pouvant aller jusqu'à 400 nm.

18. Dispositif selon la revendication 16 dans lequel ladite technique d'inspection absorbante utilise la lumière à une longueur d'onde d'environ 340 nm.

19. Dispositif selon la revendication 14 dans lequel ladite seconde technique d'inspection de vision industrielle est située avant ladite étape de placement de ladite lentille de contact de type hydrogel dans ledit emballage final.

20. Dispositif selon la revendication 19 dans lequel ladite seconde technique d'inspection de vision industrielle est une technique d'inspection d'éclairage en fond clair.

21. Dispositif selon la revendication 20 dans lequel ladite technique d'inspection d'éclairage en fond clair utilise la lumière à une longueur d'onde allant d'environ 560 nm à environ 640 nm.

22. Dispositif selon la revendication 12 dans lequel ladite première technique d'inspection de vision industrielle est située en ligne dans la partie amont de la chaîne de production et est une technique d'inspection absorbante, et dans lequel ladite seconde technique d'inspection de vision industrielle est située en ligne dans la partie aval de la chaîne de production et est une technique d'inspection d'éclairage en fond clair.

23. Dispositif selon la revendication 22 dans lequel ladite technique d'inspection absorbante utilise la lumière à une longueur d'onde allant d'environ 0 nm à environ 360 nm et la technique d'inspection d'éclairage en fond clair utilise la lumière à une longueur d'onde allant d'environ 560 nm à environ 640 nm.

24. Dispositif selon la revendication 23 dans lequel ladite technique d'inspection absorbante utilise la lumière à une longueur d'onde d'environ 340 nm et la technique d'inspection d'éclairage en fond clair utilise la lumière à une longueur d'onde allant d'environ 560 nm à environ 640 nm.
